# EUROPEAN PATENT SPECIFICATION

(11) **EP 3 802 318 B1**
(45) Date of publication and mention of the grant of the patent: **10.12.2025**
(21) Application number: 19727471.5
(22) Date of filing: 23.05.2019
(51) Int. Cl.: B64D 1/10, B64D 7/02, H04B 5/00

(54) **IMPROVEMENTS IN ELECTRICAL INTERCONNECTIONS BETWEEN AIRCRAFT OR OTHER MOUNTING PLATFORMS AND CARRIAGE STORES MOUNTED THEREON**
VERBESSERUNGEN DER ELEKTRISCHEN VERBINDUNGEN ZWISCHEN EINEM FLUGZEUG ODER EINER ANDEREN MONTAGEANORDNUNG UND EIN DARAUF MONTIERTE BEHÄLTER
AMÉLIORATIONS DES INTERCONNEXIONS ÉLECTRIQUES ENTRE UN AVION OU D'AUTRES PLATEFORMES DE MONTAGE ET DES DISPOSITIFS D'EMPORT MONTÉS DESSUS

(30) Priority: 25.05.2018 GB 201808667
(43) Date of publication of application: 14.04.2021
(73) Proprietor: MBDA UK Limited, Stevenage, Hertfordshire SG1 2DA (GB)
(72) Inventor: COOK, Ben, Stevenage Hertfordshire SG1 2DA (GB); BOWDEN-PETERS, Edwin, Stevenage Hertfordshire SG1 2DA (GB)
(74) Representative: Abel & Imray LLP
(86) International application number: PCT/GB2019/051420
(87) International publication number: WO 2019/224541

(56) References cited:
- WO-A1-2016/144347
- WO-A1-2016/144347
- US-A- 5 229 538
- US-A- 5 229 538

## Description

### FIELD OF THE INVENTION

This invention relates to the field of munitions and other carriage stores, and in particular to electrical interconnections between a carriage store and the platform (for example an aircraft) on which it is mounted.

### BACKGROUND ART

Many munitions and other carriage stores need to exchange electrical signals with the platform that carries them. Examples of electrical signals that are exchanged include electrical power, communications signals and detection signals (for example, signals to indicate that the carriage store is, or is not, present).

In a typical arrangement, a missile is attached to a platform, in the form of an aircraft, via a rail that is suspended from the wing of the aircraft. The rail is provided with an interface connector and the missile is provided with a corresponding interface connector. When the missile is mounted on the rail by ground crew, the rail interface connector and the missile interface connector are connected using an umbilical cable that has connectors complementary to the rail interface connector and the missile interface connector. A communications interface is thereby provided between the missile and the aircraft.

At present, standard interfaces for electrical connections between a military aircraft and a carriage store are set out in various standards, for example MIL-STD-1760 Aircraft/Store Electrical Interconnection System. The standard defines connections for various signals. The signals are transferred between the platform and the store via copper interconnects between copper cables or via optical interconnects between optical fibres. However, such connections are difficult and time-consuming to install and, even with the connection standard, different carriage stores have different sets of connectors. Specialist training is required to install the carriage store onto the platform.

Existing connectors are also prone to damage during storage and launch. Mechanisms for launching munitions can include a violent process, such as a small controlled explosion and/or mechanical ejection by a plunger: connectors are often damaged during such processes, requiring repair or replacement of the connectors on the platform. In extreme cases, the damage can be not just to the connectors but to the platform itself.

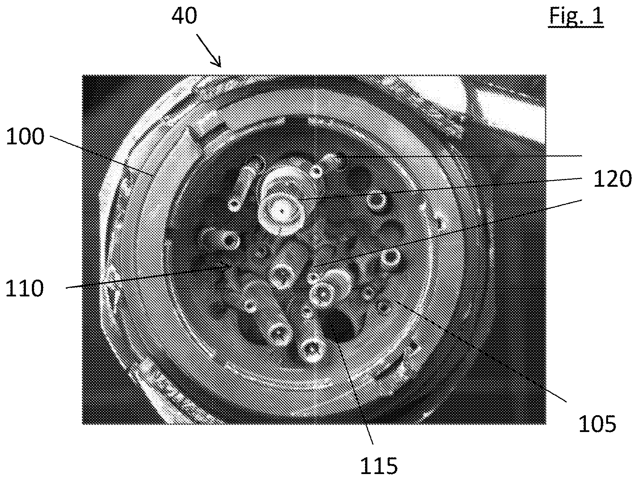

A typical rail interface connector 40 (Fig. 1), according to MIL-STD-1760, includes a tubular collar 100 and a backplate 105, which together define a connection space 110. A plurality of connectors 120 protrude, through holes 115 in the backplate 105, into the connection space 110. The connectors 120 are a collection of plugs and sockets of different shapes and sizes. As part of the process of installing the missile 10 on the rail 20, described above, the ground crew mate corresponding connectors (not shown) on the missile interface connector 50 or umbilical cable with the connectors 120 within the connection space 110. Electrical interconnections are thus provided between the systems of the missile 10 and corresponding systems of the aircraft. The connectors 120 in Fig. 1 have been damaged in use, such that they no longer sit parallel to each other, but rather face in several different directions.

US5229538A discloses a digital communication network that adapts a conventional MIL-STD-1553 aircraft weapons rack for carriage of smart weapons. The network is a communications, power and signal management interface circuit, which permits an existing single pylon wing RT/sub-bus to control a plurality of additional smart RT's. The network utilises a sub-bus which includes an RT and a bus controller for the multiple stores. The output of the RT/sub-bus is divided to create a plurality of inputs to the additional RT's, to establish a power and communications linked with the aircraft controller. The network includes a processor which receives coded digital communications from the controller and selectively rebroadcasts those communications to one of the smart weapons on the rack designated by the coded communication. The messages received from the aircraft controller are translated into assembly language and are deciphered to either operate input/output functions or to be reconfigured into ML-STD-1553 messages between the bus controller and the stores, or between the remote terminal and the aircraft. All operating functions of the smart weapons can be controller from the aircraft without any physical changes to the aircraft or the weapons rack, and with only minimal changes to the aircraft operational flight program.

Attempts have been made to replace the physical connections of MIL-STD-1760 with non-contact methods of communication, including using electromagnetic (EM) waves. However, point-to-point interconnections based on transmission of infrared EM waves have been found to be vulnerable to ingress of detritus and to electrical interference. Point-to-point interconnections based on radio-frequency (RF) EM waves are also affected by interference and EM waves tend to radiate away from the platform, not attenuating as quickly as would be desirable. Both methods are considered inappropriate for data transfer to/from carriage stores on military aircraft, especially munitions.

WO2016/144347 discloses a communication system that is positionable in a wellbore, and that can include a transceiver for coupling externally to a casing string. The first transceiver can be for wirelessly transmitting data by generating and modulating a surface wave that propagates along an interface surface. The surface wave can include an electromagnetic wave that has a magnetic field or an electric field that is at an acute angle to a direction of propagation of the surface wave. The communication system can also include a second transceiver for coupling to the casing string and for wirelessly receiving the surface wave and detecting the data.

As well as rail launches, missiles may be launched from tubes or canisters. Such tube launches are common when the launch platform is a surface vessel (e.g. a ship) or a subsurface vessel. At present, most canister-based launchers are single-use, as the time required to re-attach the umbilical connector after launch is too long for the re-attachment to be undertaken during combat.

A further problem with existing mechanical implementations of electrical connections is that they are prone to sticking or seizing. For example, a failure to physically separate the connectors can result in the launch being aborted by the platform or missile launch controller.

It would be advantageous to provide an electrical interconnection, between a carriage store and the platform on which it is mounted, in which one or more of the aforementioned disadvantages is eliminated or at least reduced.

### SUMMARY

Briefly and in general terms, the present invention provides a method and apparatus directed towards improving electrical interconnections, between a munition or other carriage store and the platform on which it is mounted, by using surface waves, for example Zenneck waves, to transmit electrical signals between them.

Thus, a first aspect of the invention provides a method of operating a carriage store, mounted on a platform, comprising communicating between the carriage store and the platform using Zenneck surface waves.

A second aspect of the invention provides a carriage store for mounting on a platform, the carriage store including a transmitter and/or receiver configured to communicate with the platform using Zenneck surface waves.

A third aspect of the invention provides a platform for carrying a carriage store, the platform including a transmitter and/or receiver configured to communicate with the carriage store using Zenneck surface waves.

It will be appreciated that features described in relation to one aspect of the present invention can be incorporated into other aspects of the present invention. For example, an apparatus of the invention can incorporate any of the features described in this disclosure with reference to a method, and vice versa.

### BRIEF DESCRIPTION OF THE DRAWINGS

Example embodiments of the invention will now be described by way of example only and with reference to the accompanying drawings.
FIG. 1 is a perspective view of a prior-art MIL-STD-1760 Interface connector that has been damaged in use.
FIG. 2 is results from a simulation of electromagnetic radiation propagating adjacent to a conductor from a source, for the cases of free-space propagation and surface waves.
FIG. 3 is a schematic diagram showing propagation of a surface wave.
FIG. 4 is a schematic diagram showing an interface that is an example embodiment of the present invention.

For convenience and economy, the same reference numerals are used in different figures to label identical or similar elements shown.

### DETAILED DESCRIPTION

Embodiments are described herein in the context of approaches to improve electrical interconnections between a carriage store and the platform on which it is mounted by replacing the mechanical connectors of prior-art interconnections with transmitters and receivers of surface waves, for example Zenneck waves. Those of ordinary skill in the art will realize that the following detailed description is illustrative only and is not intended to be in any way limiting. Other embodiments of the present invention will readily suggest themselves to such skilled persons having the benefit of this disclosure. Reference will be made in detail to implementations as illustrated in the accompanying drawings. The same reference indicators will be used throughout the drawings and the following detailed description to refer to the same or like parts.

H-surface waves are magnetic waves corresponding to electrical Zenneck waves, and the term "Zenneck surface waves" and "Zenneck waves" as used herein encompasses H-surface waves.

Zenneck surface waves are EM waves that are bound to the interface between two different media. The waves propagate in two dimensions with negligible external radiation, i.e. the amplitude of the EM field decays rapidly perpendicular to the interface. In essence, the interface acts as a two dimensional EM wave guide. The decay of amplitude away from the surface is exponential, and its rate is determined by the reactance of the interface surface; hence, high-reactance surfaces support well-confined Zenneck surface waves.

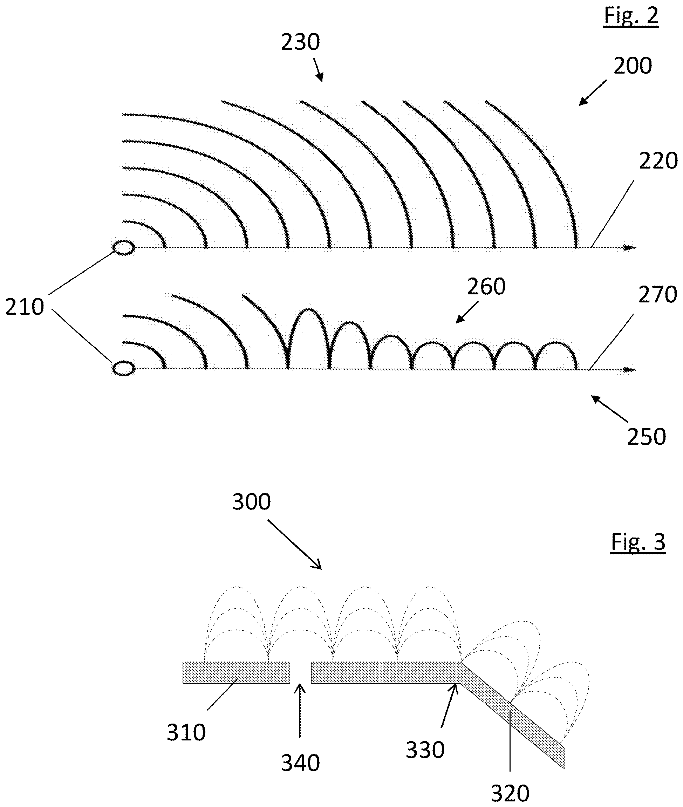

Simulations of typical behavior of electromagnetic waves are shown in Fig. 2. In conventional, free-space propagation (upper plot 200) from a point source 210 adjacent to a conductive surface 220, the electromagnetic waves 230 extend freely away from the surface 220, having an amplitude that decays only slowly with distance from the surface 220. In contrast, in surface-wave propagation (lower plot 250), the electromagnetic surface Zenneck waves 260 are strongly localized to close to a surface 270 (which is castellated - not shown in Fig. 2), having an amplitude that decays rapidly with distance from the surface 270.

Two properties of surface waves are illustrated schematically in Fig. 3. Surface waves 300 propagated along a first surface 310 to a second surface 320. The second surface includes a bend 330, but the surface wave 300 is able to propagate around that bend 330 in a way that a free-space wave would not, with much less loss. There is also a gap 340 between the first surface 310 and the second surface 320. Surface waves can jump small gaps and reacquire the surface to continue their 2D propagation (however there is an associated loss proportional to the number of wavelengths of gap traversed). To cross gaps in that way, both materials should be able to support Zenneck surface waves at the relevant frequency. They will typically be facing each other or be in close proximity (surface waves will not in general cross to the other side of the substrate, for example).

UK patent application publication no. GB2494435A (Roke Manor Research), describes an apparatus for radio communication using surface waves, the apparatus comprising: a transmission medium having a first surface suitable for the propagation of surface waves, the first surface having a reactive impedance; at least one communication node, the node having a transmitter and/or receiver coupled to a transducer, the transducer positioned on or adjacent the first surface of said transmission medium; wherein the at least one communication node is arranged to launch and/or receive surface waves, over the first surface of said transmission medium. The document describes Zenneck surface waves providing communication between different communication nodes across the transmission medium. The transmission medium includes a dielectric layer and a conductive layer, the dielectric layer being a flexible dielectric and the conductive layer a conductive woven mesh. The document describes the apparatus being incorporated in an article of clothing (comprising sensors) or the transmission medium forming part of a wall, floor, ceiling, building, clothing or furniture. The document also disclose a building, vehicle or other vessel having at least one surface, the building, vehicle or other vessel comprising a transmission medium having a first surface suitable for the propagation of electromagnetic surface waves, wherein the first surface of the transmission medium has a reactive impedance.

European patent application publication no. EP2790038A2 (Roke Manor Research) discloses a system for sensing disruption to a signal propagating along a guiding medium for guiding electromagnetic surface waves, the system comprising: a guiding medium for guiding electromagnetic surface waves; a transmitter arranged to transmit electromagnetic surface waves along the guiding medium; a receiver arranged to receive electromagnetic surface waves transmitted along the guiding medium and to measure changes to a signal transmitted via the guiding medium in order to sense disruption to said signals based on said measured changes. In an embodiment, the system is used to detect damage to a surface, including the appearance of gaps or movement in a surface. The guiding medium is placed on a structurally important surface of a vehicle, such as an aircraft wing. Any movement, cracks or gaps that appear in the surface will stretch, move or break the guiding medium. Such movement will result in a drop power at the receiver, which is picked up by a power measurement device.

EP2822090A1 (Roke Manor Research) describes a communications system, comprising: a surface wave channel for guiding electromagnetic surface waves; a transmitter, coupled to said surface wave channel for transmitting signals along said surface wave channel; one or more disrupters, arranged to be positioned at arbitrary locations on or adjacent said surface wave channel, and arranged to convert said surface wave signals to space wave signals; and one or more receiver terminals, arranged to be positioned at locations corresponding to said disrupters, each terminal comprising an antenna for receiving said space wave signals. The document describes an embodiment in which the system is used as an in-flight entertainment system on a passenger airplane.

The inventors have recognized that using surface waves offers particular advantages in the electrical interconnections used in carrying munitions, or other carriage stores, on platforms, because those interconnections are typically made and broken during use. Use of surface wave for the interconnection eliminates the need for mechanical coupling of the store to the platform. That enables the store to be installed quickly and significantly reduces the risk of damage during removal, particularly during a launch of a munition.

Communications using Zenneck surface waves are less vulnerable to RF interference from external sources than prior-art contactless systems, as free-space RF signals typically cannot propagate on the material that supports a Zenneck wave. The approach of the invention is also more secure than prior-art approaches, as the very little of the surface wave signal radiates away from the supporting material.

As previously stated, the first aspect is directed to a method of operating a carriage store, mounted on a platform, comprising communicating between the carriage store and the platform using Zenneck surface waves.

The method includes transmitting Zenneck waves across a surface of the carriage store, the Zenneck waves crossing from that surface to a surface of the platform, and/or the method includes transmitting Zenneck waves across a surface of the platform, the Zenneck waves crossing from that surface to a surface of the carriage store. The method may include detecting Zenneck waves on a surface of the carriage store, the Zenneck waves having crossed to that surface from a surface of the platform. The method may include detecting Zenneck waves on a surface of the platform, the Zenneck waves having crossed to that surface from a surface of the carriage store.

The monitored surface wave may propagate along the casing of the carriage store, and/or the casing of the platform. Advantageously, for example, using the casing of the store to support propagation of the surface wave enables stores of different lengths to be installed on the platform without the need for rewiring or otherwise retro-fitting the platform.

The Zenneck surface waves may propagate in a channel or other guide region of the carriage store that has been provided to guide the waves along a selected path. However, in advantageous embodiments, there is no need to provide such guidance regions; rather, the Zenneck surface waves propagate freely (or substantially freely, subject to any obstacles) on the surface of the store.

As the Zenneck waves can "jump" small gaps, data may be sent without galvanic contact between the carriage store and the platform. Thus, the Zenneck waves may pass between a surface of the carriage store and a surface of the platform, said surfaces not being in galvanic contact with each other. There may be a gap (for example an air gap) between the surfaces, for example a gap of less than 5 wavelengths of the waves.

Although communication of the surface wave across a gap may be advantageous, the Zenneck waves may pass across a region of contact between the carriage store and the platform. Even if in cases in which there is contact, the connection can still be re-usable, as it may be merely touching contact, rather than a mechanical interconnection such as a plug-and-socket arrangement of the kind used in prior-art systems.

Whether there is direct contact or a gap, the Zenneck waves may cross from one body to the other at a region where the surfaces of the carriage store and the platform approach each other. For example, a protrusion or arm may be provided on the carriage store or the platform that, when the carriage store is installed on the platform, terminates sufficiently close to the surface of the other body that surface waves can pass from the surface to the protrusion or arm and thence onto another surface or *vice versa.* Alternatively, the surface of the carriage store and the surface of the platform which support the surface waves may be close enough to the surface of the other body that surface waves can pass between them over a major part of their area.

The platform may include a pylon on which the carriage store is mounted. The surface wave may pass from the carriage store to the platform via a surface of the pylon. The platform may include a tube in which the carriage store is mounted. The surface wave may pass from the carriage store to the platform via a surface of the tube, for example the interior surface of the tube.

The surface waves may propagate along the surface of a sacrificial element directly connecting the platform and the carriage store (i.e. without a gap). The sacrificial element may be, for example, a strap, made of a material suitable for supporting surface waves, and passing between the carriage store and the platform. Although that approach does lose the benefits of galvanic isolation, it still provides a system that is robust against damage, due to the nature of the surface waves.

The carriage store may be, for example, a munition (for example a missile or a bomb), a military store, countermeasures equipment, communications equipment, telemetry equipment, data gathering/test devices, a multipoint or dedicated launcher or a surveillance pod.

The platform may be a surface or subsurface vehicle, for example an aircraft (fixed-wing or rotary), boat (e.g. a submarine) or land vehicle. The platform may be an artillery launch platform. The platform may be a standalone or vehicle-mounted canister system. The platform may be test equipment. The platform may be a hand-held launch platform. The platform may itself be a munition (i.e. carriage store may be a sub-munition, i.e. a mini-missile).

The method may include the step of installing the carriage store on the platform, which may include the step of creating a communication link between the carriage store and the platform over which the surface-waves travel.

The method may include the step of uninstalling the carriage store from the platform, which may include the step of breaking a communication link between the carriage store and the platform over which the surface-waves travel. In the case of a munition, the uninstalling step may be a step of launching the munition.

The Zenneck waves may provide power from the platform to the carriage store. The Zenneck waves may transfer data between the platform and the carriage store (in either or both directions).

The method may include using changes in the communicated surface waves to monitor one or more conditions of the carriage store, the platform, or their environment, and preferably to provide an indication of the condition(s), or of changes therein, to a system or person. For example, the method may include monitoring for separation of the carriage store from the platform, for example by monitoring for cessation of the surface-wave signal. Changes in the surface waves may be monitored to indicate the health of the connection between the carriage store and the platform; for example damage to the connection or to other elements may be identified from the changes. Changes in the surface waves due to atmospheric conditions may be used to monitor the atmospheric environment during carriage and/or free-flight. Changes in the surface waves due to vibration and or shocks may be monitored. Changes in the surface waves may be used to monitor for interference (e.g. unwanted but accidental electromagnetic interference or hostile attempts to intercept communications).

Data communicated between the carriage store and the platform may be read directly off the surface of the carriage store or the platform by a detector of surface waves, arranged on the other of the carriage store and the platform.

Another advantage of the invention is that, in some embodiments, the communication can be between the platform and a plurality of carriage stores mounted on the platform. For example, the surface waves may be broadcast across a surface of the platform and received by the plurality of carriage stores. Signals to, from and/or between the plurality of carriage stores may be multiplexed; for example, there may be a master controller and the master controller may communicate with the plurality of carriage stores using multiplexed surface-wave signals.

There are many known substrates which can support surface waves including various composites, laminations, and castellated materials. The surface waves may propagate at the surface of a region of the carriage store and/or the platform that is metallic or dielectric. For example, they may propagate along a surface that is a conductor, a dielectric slab, a dielectric coating surface of a conductor, a periodic surface such as a castellated or corrugated surface and/or a surface of a metamaterial, for example a Sievenpiper surface. The substrate supporting the suface waves may be a layer applied to a bulk material, for example a layer painted or sprayed onto a bulk material.

Preferably, the reactive impedance (reactance) of the surface on which the surface waves propagate is greater than the resistive impedance.

The surface waves have a frequency of 1 GHz or more, for example 10 GHz or more, or 20 GHz or more. The surface waves may have a frequency of 110 GHz or less, for example 100 GHz or less, or 90 GHz or less. The surface waves may have a frequency in the L to W bands of the IEEE Standard 521-2002.

As previously stated, the second aspect of the invention provides a carriage store for mounting on a platform, the carriage store including a transmitter and/or receiver configured to communicate with the platform using Zenneck surface waves.

As previously stated the third aspect of the invention provides a platform for carrying a carriage store, the platform including a transmitter and/or receiver configured to communicate with the carriage store using Zenneck surface waves.

The transmitter may include a transducer for converting electrical signals from electrical circuitry within the carriage store or the platform into Zenneck surface waves. The receiver may include a transducer for converting Zenneck surface waves into electrical signals that are fed to electrical circuitry within the carriage store or the platform.

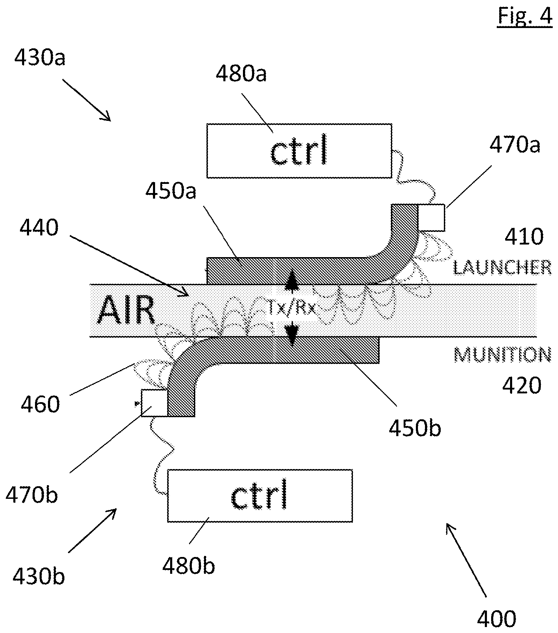

An interface 400 according to an example embodiment of the invention (Fig. 4) provides an electrical connection between a launcher 410 and a munition 420. The interface is formed from a launcher-side surface wave module 430a on the launcher and a munition-side surface wave module 430b on the munition. The launcher-side surface wave module 430a and the munition-side surface wave module 430b are separated by an air gap 440. More specifically, the air gap 440 is between a launcher-side surface-wave-supporting substrate 450a and a munition-side surface-wave-supporting substrate 450b. In this example, the surface-wave-supporting substrates 450a,b are castellated surfaces (the castellations are not shown in Fig. 4).

Both the launcher-side surface wave module 430a and the munition-side surface wave module 430b can, in this example, both transmit and receive surface waves 460. Each module 430a,b generates and detects surface waves using a transducer 470a,b attached to the castellated surface 450a,b. Each transducer 470a,b is controlled by a corresponding controller 480a,b.

While the present disclosure has been described and illustrated with reference to particular embodiments, it will be appreciated by those of ordinary skill in the art that the disclosure lends itself to many different variations not specifically illustrated herein.

It will be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A method of operating a carriage store, mounted on a platform, comprising communicating between the carriage store and the platform, **CHARACTERIZED IN THAT** the method comprises using Zenneck surface waves, the surface waves having a frequency of at least 1 GHz, and wherein the method comprises transmitting Zenneck waves across a surface of the carriage store, the Zenneck waves crossing from that surface to the surface of the platform, and/or wherein the method comprises transmitting Zenneck waves across a surface of the platform, the Zenneck waves crossing from that surface to a surface of the carriage store.

2. The method of claim 1, wherein the Zenneck waves pass between a surface of the carriage store and a surface of the platform, said surfaces not being in galvanic contact with each other.

3. The method of claim 1, wherein the Zenneck waves pass across a region of contact between the carriage store and the platform.

4. The method of claim 1, wherein the Zenneck waves propagate along the surface of a sacrificial element directly connecting the platform and the carriage store.

5. The method of any preceding claim, wherein the Zenneck waves provide power from the platform to the carriage store.

6. The method of any of claims 1 to 4, wherein the Zenneck waves transfer data between the platform and the carriage store.

7. The method of any preceding claims, including the step of using changes in the communicated Zenneck waves to monitor one or more conditions of the carriage store, the platform, or their environment.

8. The method of claim 7, including the step of monitoring for separation of the carriage store from the platform.

9. The method of claim 7, including the step of monitoring changes in the surface waves to indicate the health of the connection between the carriage store and the platform.

10. The method of claim 7, including the step of using changes in the surface waves due to atmospheric conditions to monitor the environment during carriage and/or free-flight.

11. The method of any preceding claim, in which the communication is between the platform and a plurality of carriage stores mounted on the platform.

12. The method of claim 11, wherein the surface waves are broadcast across a surface of the platform and received by the plurality of carriage stores.

13. The method of claim 11 or claim 12, wherein signals to, from and/or between the plurality of carriage stores are multiplexed.

14. A carriage store for mounting on a platform, the carriage store configured to communicate with the platform, **CHARACTERIZED IN THAT** the communication uses Zenneck surface waves, the surface waves having a frequency of at least 1 GHz, the carriage store including a transmitter, wherein the Zenneck waves are transmitted by the transmitter across a surface of the carriage store, and wherein the Zenneck waves cross from that surface to the surface of the platform, and/or the carriage store including a receiver, wherein Zenneck waves are transmitted across a surface of the platform, and wherein the Zenneck waves cross from that surface to a surface of the carriage store and are received by the receiver.

15. A platform for carrying a carriage store, the platform configured to communicate with the carriage store, **CHARACTERIZED IN THAT** the communication uses Zenneck surface waves, the surface waves having a frequency of at least 1 GHz, the platform including a transmitter, wherein the Zenneck waves are transmitted by the transmitter across a surface of the platform, and wherein the Zenneck waves cross from that surface to the surface of the carriage store, and/or the Zenneck waves are transmitted across a surface of the carriage store, and wherein the Zenneck waves cross from that surface to a surface of the platform and are received by the receiver.

## Patentansprüche

1. Verfahren zum Betätigen eines auf einer Plattform montierten Transportkörpers, das die Kommunikation zwischen dem Transportkörper und der Plattform umfasst,
**dadurch gekennzeichnet, dass** das Verfahren die Verwendung von Zenneck-Oberflächenwellen umfasst, wobei die Oberflächenwellen eine Frequenz von mindestens 1 GHz aufweisen und wobei das Verfahren das Senden von Zenneck-Wellen über eine Oberfläche des Transportkörpers beinhaltet, wobei die Zenneck-Wellen von dieser Oberfläche zu der Oberfläche der Plattform übergehen, und/oder wobei das Verfahren das Senden von Zenneck-Wellen über eine Oberfläche der Plattform beinhaltet, wobei die Zenneck-Wellen von dieser Oberfläche zu einer Oberfläche des Transportkörpers übergehen.

2. Verfahren nach Anspruch 1,
wobei die Zenneck-Wellen zwischen einer Oberfläche des Transportkörpers und einer Oberfläche der Plattform hindurchgehen, wobei die Oberflächen nicht in galvanischem Kontakt miteinander stehen.

3. Verfahren nach Anspruch 1,
wobei die Zenneck-Wellen über einen Kontaktbereich zwischen dem Transportkörper und der Plattform laufen.

4. Verfahren nach Anspruch 1,
wobei sich die Zenneck-Wellen entlang der Oberfläche eines Opferelements ausbreiten, das die Plattform und den Transportkörper direkt verbindet.

5. Verfahren nach einem der vorhergehenden Ansprüche,
wobei die Zenneck-Wellen Energie von der Plattform zu dem Transportkörper liefern.

6. Verfahren nach einem der Ansprüche 1 bis 4,
wobei die Zenneck-Wellen Daten zwischen der Plattform und dem Transportkörper übertragen.

7. Verfahren nach einem der vorhergehenden Ansprüche, das den Schritt beinhaltet, Änderungen in den übermittelten Zenneck-Wellen zu verwenden, um einen oder mehrere Zustände des Transportkörpers, der Plattform oder deren Umgebung zu überwachen.

8. Verfahren nach Anspruch 7,
das den Schritt der Überwachung auf eine Trennung des Transportkörpers von der Plattform umfasst.

9. Verfahren nach Anspruch 7,
das den Schritt der Überwachung von Änderungen in den Oberflächenwellen umfasst, um die Gesundheit der Verbindung zwischen dem Transportkörper und der Plattform anzuzeigen.

10. Verfahren nach Anspruch 7,
das den Schritt umfasst, Änderungen bei den Oberflächenwellen aufgrund atmosphärischer Bedingungen zu verwenden, um die Umgebung während des Transports und/oder des freien Flugs zu überwachen.

11. Verfahren nach einem der vorhergehenden Ansprüche,
bei dem die Kommunikation zwischen der Plattform und einer Mehrzahl von auf der Plattform montierten Transportkörpern erfolgt.

12. Verfahren nach Anspruch 11,
wobei die Oberflächenwellen über eine Oberfläche der Plattform ausgesendet und von der Mehrzahl von Transportkörpern empfangen werden.

13. Verfahren nach Anspruch 11 oder Anspruch 12,
wobei Signale zu, von und/oder zwischen der Mehrzahl von Transportkörpern gemultiplext werden.

14. Transportkörper zur Montage auf einer Plattform, wobei der Transportkörper dazu ausgebildet ist, mit der Plattform zu kommunizieren,
**dadurch gekennzeichnet, dass** die Kommunikation Zenneck-Oberflächenwellen verwendet, wobei die Oberflächenwellen eine Frequenz von mindestens 1 GHz aufweisen, wobei der Transportkörper einen Sender aufweist, wobei die Zenneck-Wellen von dem Sender über eine Oberfläche des Transportkörpers gesendet werden, und wobei die Zenneck-Wellen von dieser Oberfläche zu der Oberfläche der Plattform übergehen, und/oder wobei der Transportkörper einen Empfänger aufweist, wobei Zenneck-Wellen über eine Oberfläche der Plattform gesendet werden und wobei die Zenneck-Wellen von dieser Oberfläche zu einer Oberfläche des Transportkörpers übergehen und von dem Empfänger empfangen werden.

15. Plattform zum Tragen eines Transportkörpers, wobei die Plattform dazu ausgebildet ist, mit dem Transportkörper zu kommunizieren,
**dadurch gekennzeichnet,**
**dass** die Kommunikation Zenneck-Oberflächenwellen verwendet, wobei die Oberflächenwellen eine Frequenz von mindestens 1 GHz aufweisen, wobei die Plattform einen Sender aufweist, wobei die Zenneck-Wellen von dem Sender über eine Oberfläche der Plattform gesendet werden und wobei die Zenneck-Wellen von dieser Oberfläche zu der Oberfläche des Transportkörpers übergehen, und/oder wobei Zenneck-Wellen über eine Oberfläche des Transportkörpers gesendet werden und wobei die Zenneck-Wellen von dieser Oberfläche zu einer Oberfläche der Plattform übergehen und von dem Empfänger empfangen werden.

## Revendications

1. Procédé de fonctionnement d'un magasin de chariots monté sur une plateforme, comprenant une communication entre le magasin de chariots et la plateforme, **caractérisé en ce que** le procédé comprend d'utiliser des ondes de surface de Zenneck, les ondes de surface ayant une fréquence d'au moins 1 GHz, et dans lequel le procédé comprend de transmettre des ondes de Zenneck à travers une surface du magasin de chariots, les ondes de Zenneck traversant depuis cette surface vers la surface de la plateforme, et/ou dans lequel le procédé comprend de transmettre des ondes de Zenneck à travers une surface de la plateforme, les ondes de Zenneck traversant depuis cette surface vers une surface du magasin de chariots.

2. Procédé selon la revendication 1, dans lequel les ondes de Zenneck passent entre une surface du magasin de chariots et une surface de la plateforme, lesdites surfaces n'étant pas en contact galvanique l'une avec l'autre.

3. Procédé selon la revendication 1, dans lequel les ondes de Zenneck traversent une région de contact entre le magasin de chariots et la plateforme.

4. Procédé selon la revendication 1, dans lequel les ondes de Zenneck se propagent le long d'une surface d'un élément sacrificiel connectant la plateforme et le magasin de chariots.

5. Procédé selon l'une quelconque des revendications précédentes, dans lequel les ondes de Zenneck fournissent de l'énergie depuis la plateforme au magasin de chariot.

6. Procédé selon l'une quelconque des revendications 1 à 4, dans lequel les ondes de Zenneck transfèrent des données entre la plateforme et le magasin de chariots.

7. Procédé selon l'une quelconque des revendications précédentes, incluant l'étape d'utilisation de changements dans les ondes de Zenneck communiquées pour contrôler au moins un état du magasin de chariots, de la plateforme ou de leur environnement.

8. Procédé selon la revendication 7, incluant l'étape de contrôle pour séparer le magasin de chariots de la plateforme.

9. Procédé selon la revendication 7, incluant l'étape de contrôle de changements dans les ondes de surface pour indiquer l'état de la connexion entre le magasin de chariots et la plateforme.

10. Procédé selon la revendication 7, incluant l'étape d'utilisation de changements dans les ondes de surface en raison des conditions atmosphériques pour contrôler l'environnement pendant le transport et/ou le vol libre.

11. Procédé selon l'une quelconque des revendications précédentes, dans lequel la communication se fait entre la plateforme et une pluralité de magasins de chariots montés sur la plateforme.

12. Procédé selon la revendication 11, dans lequel les ondes de surface sont diffusées à travers une surface de la plateforme et reçues par la pluralité de magasins de chariots.

13. Procédé selon la revendication 11 ou la revendication 12, dans lequel des signaux vers, en provenance de et/ou entre la pluralité de magasins de chariots sont multiplexés.

14. Magasin de chariots destiné à être monté sur une plateforme, le magasin de chariots étant configuré pour communiquer avec la plateforme, **caractérisé en ce que** la communication utilise des ondes de surface de Zenneck, les ondes de surface ayant une fréquence d'au moins 1 GHz, le magasin de chariots incluant un transmetteur,
dans lequel les ondes de Zenneck sont transmises par le transmetteur à travers une surface du magasin de chariots, et dans lequel les ondes de Zenneck traversent depuis cette surface vers la surface de la plateforme, et/ou le magasin de chariots inclus un récepteur, les ondes de Zenneck sont transmises à travers une surface de la plateforme, et dans lequel les ondes de Zenneck traversent depuis cette surface vers une surface du magasin de chariots et sont reçues par le récepteur.

15. Plateforme destinée à porter un magasin de chariots, la plateforme étant configurée pour communiquer avec le magasin de chariots, **caractérisé en ce que** la communication utilise des ondes de surface de Zenneck, les ondes de surface ayant une fréquence d'au moins 1 GHz, la plateforme incluant un transmetteur, dans laquelle les ondes de Zenneck sont transmises par le transmetteur à travers une surface de la plateforme, et dans laquelle les ondes de Zenneck traversent depuis cette surface vers la surface du magasin de chariots, et/ou les ondes de Zenneck sont transmises à travers une surface du magasin de chariots, et dans laquelle les ondes de Zenneck traversent depuis cette surface vers une surface de la plateforme et sont reçues par le récepteur.
